# EUROPEAN PATENT APPLICATION

(11) **EP 4 033 686 A1**
(43) Date of publication of application: **27.07.2022**
(21) Application number: 20879477.6
(22) Date of filing: 01.09.2020
(51) Int. Cl.: H04L 5/00

(54) **SPATIAL DIVISION MULTIPLEX ACCESS METHOD AND APPARATUS, ELECTRONIC DEVICE, AND COMPUTER-READABLE MEDIUM**

(30) Priority: 22.10.2019 CN 201911006330
(71) Applicant: ZTE Corporation, Shenzhen, Guangdong 518057 (CN)
(72) Inventor: ZHANG, Yujie, Shenzhen, Guangdong 518057 (CN)
(74) Representative: Swindell & Pearson Limited
(86) International application number: PCT/CN2020/112830
(87) International publication number: WO 2021/077904

(57) **Abstract**

A spatial division multiplex access method and apparatus under a super cell, an electronic device, and a computer-readable medium. The method comprises: obtaining a cell-portion (CP) activation set of a terminal (S1); dividing a terminal having one CP in the CP activation set into a spatial group, and dividing a terminal having more than one CP in the CP activation set into a frequency group (S2); and controlling the terminal in the spatial group to be scheduled by the CP to which the terminal belongs, and scheduling the terminal in the frequency group (S3).

## Description

### CROSS-REFERENCE TO RELATED APPLICATION

This application is filed on the basis of the Chinese patent application No. 201911006330.0 filed October 22, 2019, and claims priority of the Chinese patent application, the entire contents of which are incorporated herein by reference.

### TECHNICAL FIELD

Embodiments of the present disclosure relate to the field of Internet technologies, and in particular, to a Super-Cell Spatial Division Multiplex Access (SDMA) method and apparatus, an electronic device, and a computer-readable medium.

### BACKGROUND

With the continuous evolution of communication technologies, a Long Term Evolution (LTE) system has been widely studied and gradually applied to commercial networks. The LTE system is based on core technologies such as Orthogonal Frequency Division Multiplexing (OFDM) and Multiple-Input Multiple Output (MIMO) to provide users with a higher data transmission rate, lower transmission delay and better quality of service. A Super-Cell is a cell form in the LTE system. Each super-cell consists of multiple Cell-Portions (CPs). Each CP shares resources of the Super-Cell, including Cell IDs, time domain resources, frequency domain resources, etc. Multiple CPs may jointly process signals of the same user.

According to a Super-Cell SDMA method in some cases, mutual interference between a primary user and a secondary user is measured, and SDMA can be performed only when the mutual interference between the primary user and the secondary user is less than a certain threshold. A matching rate of the primary user and the secondary user satisfying this condition is not high, so that a probability that the user can perform SDMA is low. In addition, in the existing SDMA method, the primary user and the secondary user have to occupy exactly the same time-frequency resources, which limits the flexibility of resource allocation.

### SUMMARY

The embodiments of the present disclosure provide a Super-Cell Spatial Division Multiplex Access (SDMA) method and apparatus, an electronic device, and a computer-readable medium.

In accordance with an aspect of the present disclosure, according to some embodiments, a Super-Cell SDMA method is provided, including: obtaining a CP activation set of terminal devices; classifying the terminal devices having one CP in the CP activation set into a spatial division group; and classifying the terminal devices having more than one CP in the CP activation set into a frequency division group; and controlling the terminal devices in the spatial division group to be scheduled by the CPs to which the terminal devices belong, and scheduling the terminal devices in the frequency division group.

In accordance with an aspect of the present disclosure, according to some embodiments, a Super-Cell SDMA apparatus is provided, including: an activation set generation module configured to obtain a CP activation set of terminal devices; a grouping module configured to classify the terminal devices having one CP in the CP activation set into a spatial division group; and classify the terminal devices having more than one CP in the CP activation set into a frequency division group; and a scheduling module configured to control the terminal devices in the spatial division group to be scheduled by the CPs to which the terminal devices belong, and schedule the terminal devices in the frequency division group.

In accordance with an aspect of the present disclosure, according to some embodiments, an electronic device is provided, including: one or more processors, and a storage device storing one or more programs which, when executed by the one or more processors, cause the one or more processors carry out the method described above.

In accordance with an aspect of the present disclosure, according to some embodiments, a computer-readable medium is provided, storing a computer program which, executed by a processor, causes the processor to carry out the method described above.

### BRIEF DESCRIPTION OF DRAWINGS

The drawings are provided for a further understanding of the embodiments of the present disclosure and constitute a part of the description, which are intended to illustrate the present disclosure together with the embodiments of the present disclosure, but do not limit the present disclosure. The above and other features and advantages will become more apparent to those having ordinary skills in the art by describing specific embodiments with reference to the drawings, in which:
FIG. 1 is a schematic diagram of a Super-Cell;
FIG. 2 is a flowchart of a Spatial Division Multiplex Access (SDMA) method according to an embodiment of the present disclosure;
FIG. 3 is a flowchart of step S3 in the SDMA method according to an embodiment of the present disclosure;
FIG. 4 is a flowchart of scheduling at a first state time in an example of the SDMA method according to an embodiment of the present disclosure;
FIG. 5 is a flowchart of scheduling at a second state time in the example of the SDMA method according to an embodiment of the present disclosure;
FIG. 6 is a flowchart of scheduling at a third state time in the example of the SDMA method according to an embodiment of the present disclosure;
FIG. 7 is a structural diagram of an SDMA apparatus according to an embodiment of the present disclosure;
FIG. 8 is a structural diagram of a scheduling module in the SDMA apparatus according to an embodiment of the present disclosure; and
FIG. 9 is a schematic diagram of an electronic device according to an embodiment of the present disclosure.

### DETAILED DESCRIPTION

To enable those having ordinary skills in the art to better understand the technical schemes of the present disclosure, a Super-Cell SDMA method and apparatus, an electronic device, and a computer-readable medium according to the present disclosure are described in detail below with reference to the drawings.

Some embodiments are described more fully below with reference to the drawings, but such embodiments may be represented in different forms and should not be construed to be limited to the embodiments described herein. Rather, these embodiments are provided to make the present disclosure thorough and complete and to enable those having ordinary skills in the art to fully understand the scope of the present disclosure.

As used herein, the term "and/or" includes any and all combinations of one or more related listed items.

The terms used herein are intended only to describe specific embodiments and are not intended to limit the present disclosure. As used herein, the singular forms of "a/an" and "the" are also intended to include plural forms, unless otherwise clearly specified by the context. It is to be further understood that the terms "include/comprise" and/or "made of ..." used in the description specify the presence of the features, integers, steps, operations, elements and/or components, but do not exclude the presence or addition of one or more of other features, integers, steps, operations, elements, components and/or groups thereof.

Embodiments described herein may be described with reference to plan views and/or cross-sectional views by way of ideal schematic views of the present disclosure. Accordingly, the exemplary views may be modified depending on manufacturing technologies and/or tolerances. Therefore, the embodiments are not limited to those shown in the drawings, but include modifications in configuration formed on the basis of manufacturing processes. Therefore, regions exemplified in the drawings may have schematic properties, and shapes of regions shown in the drawings may exemplify specific shapes of regions of elements, which are not intended to be restrictive.

Unless defined otherwise, all the terms (including technical and scientific terms) used herein have the same meanings as would generally understood by those having ordinary skills in the art. It will be further understood that terms, such as those defined in commonly used dictionaries, should be interpreted as having a meaning that is consistent with their meaning in the context of the related art and the present disclosure and will not be interpreted in an idealized or overly formal sense unless expressly so defined herein.

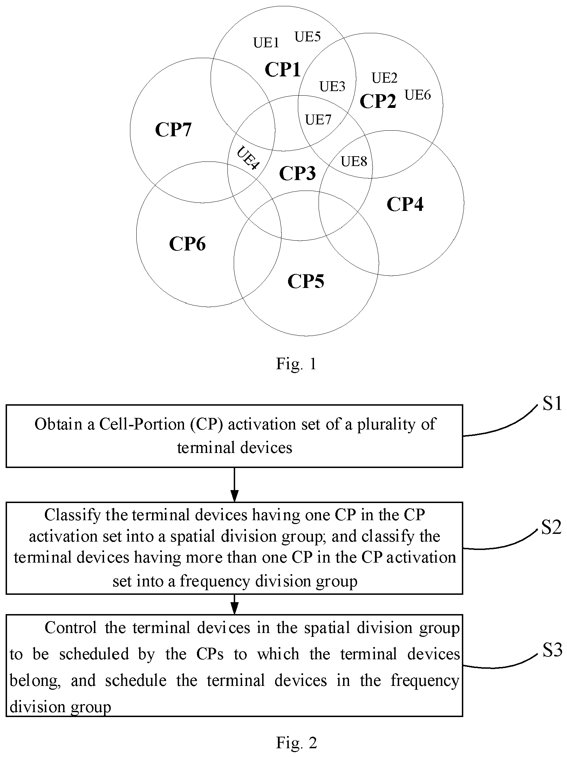

According to some embodiments of the present disclosure, a Spatial Division Multiplex Access (SDMA) method is provided. The method is applied to a Super-Cell. The method is performed by a Super-Cell coordination point (scheduler), which is called a primary CP in the following embodiments. CPs under the Super-Cell are denoted as CP1, CP2, CP3 ... CPn, respectively. FIG. 1 is a schematic diagram of a Super-Cell. In an embodiment of the present disclosure, as shown in FIG. 1, a Super-Cell includes 7 CPs, denoted as CP1, CP2, CP3 ... CP7, respectively. However, it should be understood that the number of the CPs under the Super-Cell is not limited to 7. The number of the CPs under the Super-Cell is not limited in the embodiments of the present disclosure. At the same time, in the embodiments of the present disclosure, for ease of description, the following embodiment is described by taking 8 terminal UEs in a Super-Cell as an example, which are denoted as UE1, UE2, UE3 ... UE8, respectively. However, it should be understood that the number of the UEs is not limited to 8 for the Super-Cell.

FIG. 2 is a flowchart of an SDMA method according to an embodiment of the present disclosure.

In a first aspect, the embodiment of the present disclosure provides an SDMA method. As shown in FIG. 2, the method includes steps of S1, S2 and S3.

At S1, a CP activation set of terminal devices is obtained.

At S1, a primary CP may obtain CPs of terminal UEs in a current state, and generate a CP activation set of terminal devices.

In an embodiment, as shown in FIG. 1, UE1 and UE5 are located in CP1. UE2 and UE6 are located in CP2. UE3 is located at an intersection of CP1 and CP2. UE4 is located at an intersection of CP1 and CP3. UE7 is located at an intersection of CP1, CP2, and CP3. UE8 is located at an intersection of CP2 and CP4. That is, the CP activation set of UE1 includes CP1. The CP activation set of UE2 includes CP2. The CP activation set of UE3 includes CP1 and CP2. The CP activation set of UE4 includes CP1 and CP3. The CP activation set of UE5 includes CP1. The CP activation set of UE6 includes CP2. The CP activation set of UE7 includes CP1, CP2, and CP3. The CP activation set of UE8 includes CP2 and CP4.

At S2, the terminal devices having one CP in the CP activation set are classified into a spatial division group, and the terminal devices having more than one CP in the CP activation set are classified into a frequency division group.

At S2, the primary CP classifies the UEs having one CP in the CP activation set into a spatial division group. The UEs located in different CPs are located in different layers, and spatial division multiplexing is performed between the layers. The primary CP classifies the UEs having more than one CP in the CP activation set into a frequency division group.

In an embodiment, still using the example in step S1, the CP activation set of UE1 includes CP1; the CP activation set of UE2 includes CP2; the CP activation set of UE5 includes CP1; and the CP activation set of UE6 includes CP2. Therefore, UE1, UE2, UE5, and UE6 are classified into the spatial division group, UE1 and UE5 are located in the same layer, and UE2 and UE6 are located in the same layer.

Respective CP activation sets of UE3, UE4, UE7, and UE8 include multiple CPs, so UE3, UE4, UE7, and UE8 are classified into the frequency division group.

At S3, the terminal devices in the spatial division group are controlled to be scheduled by the CPs to which the terminal devices belong, and the terminal devices in the frequency division group are scheduled.

At S3, the primary CP controls the CPs corresponding to the UEs in the spatial division group to schedule the UEs and schedules the UEs in the frequency division group.

In an embodiment, still using the examples in S1 and S2, the primary CP controls CP1 to schedule UE1 and UE5 and CP2 to schedule UE2 and UE6. At the same time, the primary CP schedules UE3, UE4, UE7, and UE8.

In an embodiment of the present disclosure, according to the number of CPs in CP activation sets of UEs, the UEs having one CP are classified into a spatial division group, spatial division multiplexing between the UEs is performed without interference. In this case, the UEs may be directly scheduled through the CP. Therefore, scheduling pressure of the primary CP can be effectively alleviated. That is, the scheduling capability requirements of the primary CP will not be too high. At the same time, if a CP activation set of a UE includes only one CP, it can be inferred that the UE is in the middle of the CP, while if a CP activation set of a UE includes two or more CPs, it can be inferred that the UE is at an edge of the CP. In this embodiment, the UE of which the CP activation set includes only one CP is scheduled by the CP, that is, distributed processing is performed on the UE. The UE of which the CP activation set includes two or more CPs is scheduled by the primary CP, that is, centralized processing is performed on the UE at the edge of the CP, so as to well cover the UE at the edge of the CP.

In some embodiments of the present disclosure, S1 may include: for each UE under a Super-Cell, acquiring, by a base station, all CPs corresponding to the UE. Signal values of the UE received on all the CPs corresponding to the UE vary. In all the CPs corresponding to the UE, some CPs have high performance in communicating with the UE, while some CPs have low performance in communicating with the UE. The CPs having high performance in communicating with the UE are determined as activated CPs of an unscheduled user. Otherwise, they are determined as inactivated CPs of the UE. A set of the determined activated CPs of the UE is taken as the CP activation set of the UE.

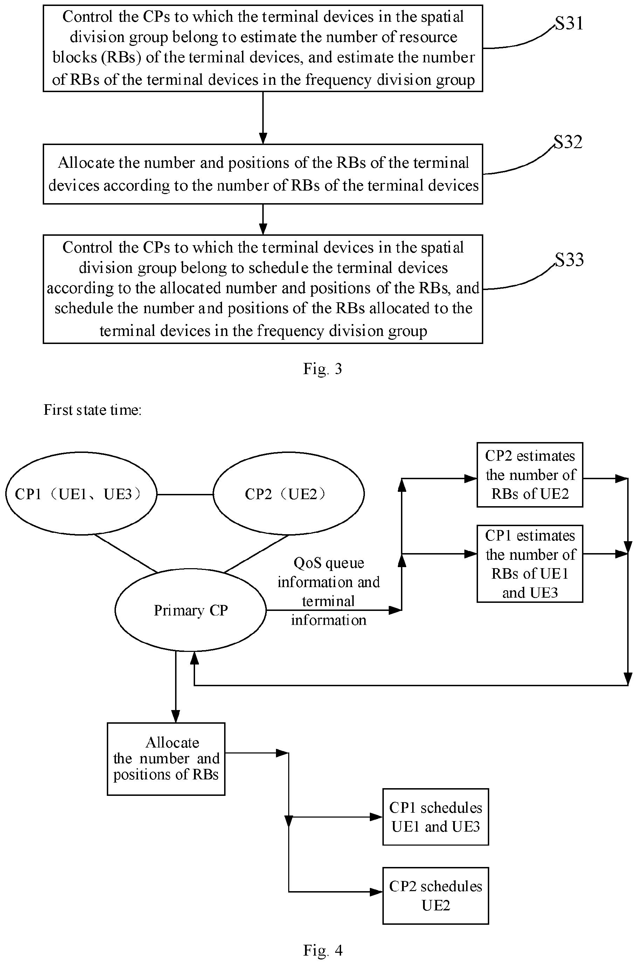

FIG. 3 is a flowchart of step S3 in the SDMA method according to an embodiment of the present disclosure.

In some embodiments of the present disclosure, referring to FIG. 3, S3 may include steps S31 to S33.

At S31, the CPs to which the terminal devices in the spatial division group belong are controlled to estimate the number of resource blocks (RBs) of the terminal devices, and the number of RBs of the terminal devices in the frequency division group is estimated.

Description is provided with an example in which the number of RBs of UE1, UE2, and UE5 is estimated.

At S31, the primary CP may sort the QoS of the UEs, generate QoS queue information, and send the QoS queue information and terminal device information of the UEs in the spatial division group to the CPs corresponding to the terminal devices in the spatial division group. In an embodiment, the terminal device information of UE1 and UE5 is sent to CP1, and the terminal device information of UE1 is sent to CP2. Then, CP1 may estimate the number of RBs of UE1 and UE5 according to the QoS queue information and the terminal device information of UE1 and UE5. CP2 estimates the number of RBs of UE2 according to the QoS queue information and the terminal device information of UE2. Certainly, at the same time, the primary CP may estimate the number of RBs required by the UEs in the frequency division group according to the QoS queue information and the terminal device information of the UEs in the frequency division group.

In some embodiments of the present disclosure, the terminal device information may include request bandwidth and/or baseband channel quality of the terminal devices. CP1 may estimate the number of RBs of UE1 and UE5 according to the QoS queue information and the request bandwidth and/or the baseband channel quality.

At S32, the number and positions of the RBs of the terminal devices are allocated according to the number of RBs of respective terminal devices.

At S32, the primary CP may receive the number of RBs of the UEs in the spatial division group sent by the CPs corresponding to the UEs in the spatial division group. In this case, the primary CP may allocate the number and positions of the RBs of the UEs according to the number of RBs of the UEs in the spatial division group and the frequency division group.

It is to be noted herein that the CPs of the UEs in the spatial division group send the number of RBs required by the UEs to the primary CP, and the primary CP may re-allocate the number of RBs of the UEs according to the QoS queue information of the UEs. The number of RBs allocated may be the same as or different from the number of RBs estimated by the CPs of the UEs in the spatial division group.

At S33, the CPs to which the terminal devices in the spatial division group belong are controlled to schedule the terminal devices according to the allocated number and positions of the RBs, and the number and positions of the RBs allocated to the terminal devices in the frequency division group are scheduled.

At S33, after the primary CP allocates the number and positions of the RBs to the CPs of the UEs in the spatial division group, the CPs may schedule the UEs according to the allocation of the primary CP. In this case, the CPs of the UEs may perform spatial division or frequency division according to the number and positions of RBs. For example, UE1 and UE5 perform frequency division in CP1, and UE2 and UE6 perform frequency division in CP1.

In order to make the Super-Cell SDMA method according to the embodiments of the present disclosure clearer, an access method during UE movement is described below.

FIG. 4 is a flowchart of scheduling at a first state time in an example of the SDMA method according to an embodiment of the present disclosure. Referring to FIG. 4, at a first state time, UE1 and UE3 are located in the center of CP1, and the CP activation set has only one CP1. UE2 is located in the center of CP2, and a CP2 activation set has only one CP2.
1. Information of activation sets of UEs is maintained on the primary CP. All UEs that need to be scheduled are grouped into a spatial division group and a frequency division group according to step S2 above. The CP of each UE maintains only scheduling information of the UE having only the CP in the CP activation set. Specifically, CP1 maintains scheduling information of UE1 and UE3, and CP2 maintains scheduling information of UE2.
2. The primary CP sorts QoS of the UEs, and then sends terminal device information and QoS queue information of the UEs in the spatial division group to the CPs corresponding to the UEs in the spatial division group. Specifically, the primary CP sends information of UE1 and UE3 to CP1 and sends information of UE2 to CP2.
3. The CPs of the UEs in the spatial division group estimate the number of RBs according to information of the UEs, such as bandwidth request BSR and baseband channel quality MCS. Specifically, CP1 estimates the number of RBs of UE1 and UE3, and CP2 estimates the number of RBs of UE2.
4. The CPs of the UEs in the spatial division group estimate the number of RBs and send information to the primary CP. Specifically, CP1 sends the estimated number of RBs of UE1 and UE3 to the primary CP, and CP2 sends the estimated number of RBs of UE2 to the primary CP.
5. The primary CP allocates positions of the RBs. Then, allocation information of the positions of the RBs is sent to the primary CP of the UE.
6. The CPs corresponding to the UEs in the spatial division group receive information of the number and positions of RBs sent by the primary CP and then perform scheduling. Specifically, CP1 schedules UE1 and UE3, and CP2 schedules UE2.

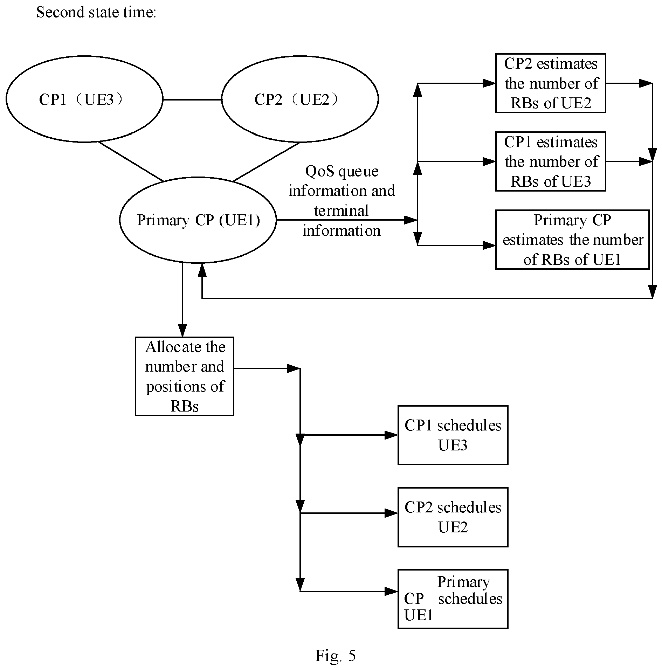

FIG. 5 is a flowchart of scheduling at a second state time in the example of the SDMA method according to an embodiment of the present disclosure. Referring to FIG. 5, at a second state time, UE1 moves to an overlapping region of CP1 and CP2. UE3 is located in the center of CP1, and the CP activation set has only one CP1. UE2 is located in the center of CP2, and the CP activation set has only one CP2.
1. Information of activation sets of UEs is maintained on the primary CP. All UEs that need to be scheduled are grouped into a spatial division group and a frequency division group according to step S2 above. The CP of each UE maintains only scheduling information of the UE having only the CP in the CP activation set. Specifically, the maintenance of CP1 belongs to the frequency division group and the scheduling information of UE1 may be migrated to the primary CP.
2. The primary CP sorts QoS of the UEs, and then sends terminal device information and QoS queue information of the UEs in the spatial division group to the CPs corresponding to the UEs in the spatial division group. Specifically, the primary CP sends information of UE3 to CP1 and sends information of UE2 to CP2.
3. The CPs of the UEs in the spatial division group estimate the number of RBs according to information of the UEs, such as bandwidth request BSR and baseband channel quality MCS. At the same time, the primary CP estimates the number of RBs of the UEs in the overlapping region. Specifically, CP1 estimates the number of RBs of UE3, CP2 estimates the number of RBs of UE2, and the primary CP estimates the number of RBs of UE1.
4. The CPs of the UEs in the spatial division group estimate the number of RBs and send information to the primary CP. Specifically, CP1 sends the estimated number of RBs of UE3 to the primary CP, and CP2 sends the estimated number of RBs of UE2 to the primary CP.
5. The primary CP allocates positions of the RBs. Then, allocation information of the positions of the RBs is sent to the primary CP of the UE.
6. The CPs corresponding to the UEs in the spatial division group receive information of the number and positions of RBs sent by the primary CP and then perform scheduling. At the same time, the UEs in the overlapping region (UEs in the frequency division group) are scheduled on the primary CP. Specifically, CP1 schedules UE3, and CP2 schedules UE2. UE1 is scheduled by the primary CP.

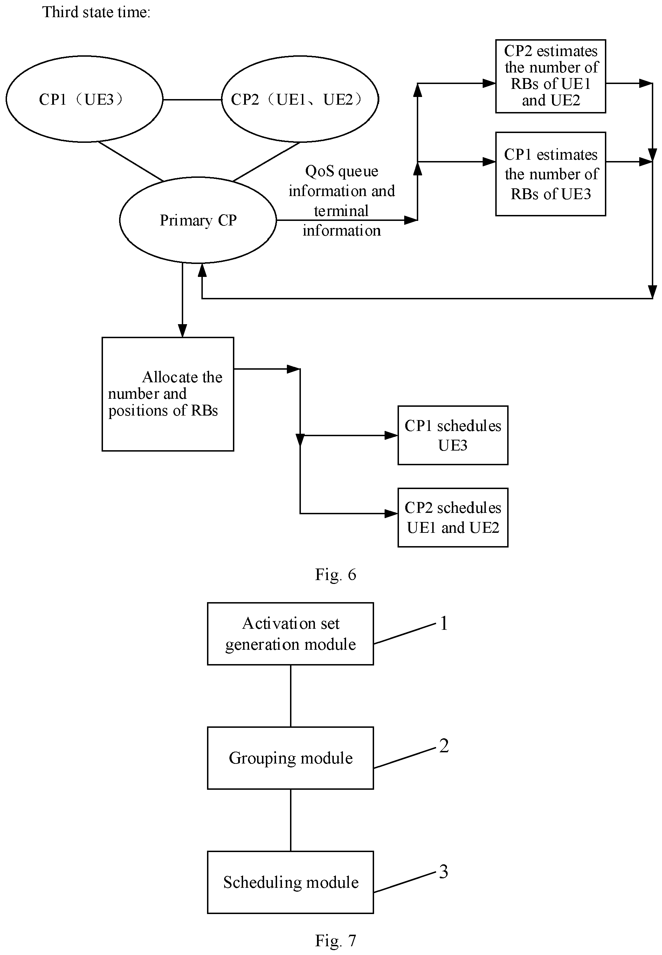

FIG. 6 is a flowchart of scheduling at a third state time in the example of the SDMA method according to an embodiment of the present disclosure. Referring to FIG. 6, at a third state time, UE1 moves to the center of CP2, UE3 is located in the center of CP1, and the CP activation set has only one CP1. UE1 and UE2 are located in the center of CP2, and the CP activation set has only one CP2.
1. Information of activation sets of UEs is maintained on the primary CP. All UEs that need to be scheduled are grouped into a spatial division group and a frequency division group according to step S2 above. The CP of each UE maintains only scheduling information of the UE having only the CP in the CP activation set. Specifically, CP1 maintains scheduling information of UE3. Since UE1 moves, scheduling information of UE1 may be migrated to CP2, and CP2 maintains scheduling information of UE1 and UE2.
2. The primary CP sorts QoS of the UEs, and then sends terminal device information and QoS queue information of the UEs in the spatial division group to the CPs corresponding to the UEs in the spatial division group. Specifically, the primary CP sends information of UE3 to CP1 and sends information of UE1 and UE2 to CP2.
3. The CPs of the UEs in the spatial division group estimate the number of RBs according to information of the UEs, such as bandwidth request BSR and baseband channel quality MCS. Specifically, CP1 estimates the number of RBs of UE3, and CP2 estimates the number of RBs of UE1 and UE2.
4. The CPs of the UEs in the spatial division group estimate the number of RBs and send information to the primary CP. Specifically, CP1 sends the estimated number of RBs of UE3 to the primary CP, and UE1 and CP2 send the estimated number of RBs of UE2 to the primary CP.
5. The primary CP allocates positions of the RBs. Then, allocation information of the positions of the RBs is sent to the primary CP of the UE.
6. The CPs corresponding to the UEs in the spatial division group receive information of the number and positions of RBs sent by the primary CP and then perform scheduling. Specifically, CP1 schedules UE3, and CP2 schedules UE1 and UE2.

FIG. 7 is a structural diagram of an SDMA apparatus according to an embodiment of the present disclosure.

In a second aspect, referring to FIG. 7, the embodiment of the present disclosure provides a Super-Cell SDMA apparatus, including an activation set generation module 1, a grouping module 2, and a scheduling module 3.

The activation set generation module 1 is configured to obtain a CP activation set of terminal devices. The grouping module 2 is configured to classify the terminal devices having one CP in the CP activation set into a spatial division group, and classify the terminal devices having more than one CP in the CP activation set into a frequency division group. The scheduling module 3 is configured to control the terminal devices in the spatial division group to be scheduled by the CPs to which the terminal devices belong, and schedule the terminal devices in the frequency division group.

It is to be noted herein that, in an embodiment of the present disclosure, the activation set generation module 1 may be configured to perform step S1; the grouping module 2 may be configured to perform step S2; and the scheduling module 3 may be configured to perform step S3. That is, the Super-Cell SDMA apparatus according to the embodiment of the present disclosure may be configured to perform the Super-Cell SDMA method described above.

In an embodiment of the present disclosure, according to the number of CPs in CP activation sets of UEs, the grouping module 2 may classify the UEs having one CP into a spatial division group, and perform spatial division multiplexing between the UEs without interference. In this case, the scheduling module 3 may directly schedule the UEs through the CP. Therefore, scheduling pressure of the primary CP can be effectively alleviated. That is, the scheduling capability requirements of the primary CP will not be too high. At the same time, if a CP activation set of a UE includes only one CP, it can be inferred that the UE is in the middle of the CP, while if a CP activation set of a UE includes two or more CPs, it can be inferred that the UE is at an edge of the CP. In this embodiment, the UE of which the CP activation set includes only one CP is scheduled by the CP, that is, distributed processing is performed on the UE. The UE of which the CP activation set includes two or more CPs is scheduled by the primary CP, that is, centralized processing is performed on the UE at the edge of the CP, so as to well cover the UE at the edge of the CP.

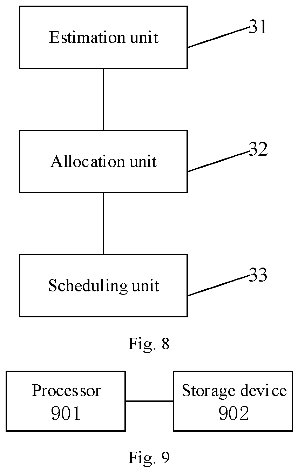

FIG. 8 is a structural diagram of a scheduling module in the SDMA apparatus according to an embodiment of the present disclosure.

In some embodiments of the present disclosure, referring to FIG. 8, the scheduling module 3 may include an estimation unit 31, an allocation unit 32, and a scheduling unit 33. The estimation unit 31 is configured to control the CPs to which the terminal devices in the spatial division group belong to estimate the number of RBs of the terminal devices and estimate the number of RBs of the terminal devices in the frequency division group. The allocation unit 32 is configured to allocate the number and positions of the RBs of the terminal according to the number of RBs of each terminal. The scheduling unit 33 is configured to control the CPs to which the terminal devices in the spatial division group belong to schedule the terminal devices according to the allocated number and positions of the RBs, and to schedule the number and positions of the RBs allocated to the terminal devices in the frequency division group.

It is to be noted herein that, in an embodiment of the present disclosure, the estimation unit 31 may be configured to perform step S31; the allocation unit 32 may be configured to perform step S32; and the scheduling unit 33 may be configured to perform step S33.

In some embodiments of the present disclosure, the estimation unit includes: a sending subunit and a control subunit. The sending subunit is configured to send QoS queue information of the terminal devices and terminal device information of the spatial division group to the CPs corresponding to the terminal devices in the spatial division group. The control subunit is configured to control the CPs corresponding to the terminal devices in the spatial division group to estimate the number of RBs of the terminal devices corresponding thereto. The terminal device information may include request bandwidth and/or baseband channel quality of the terminal devices.

Referring to FIG. 9, in a third aspect, the embodiment of the present disclosure provides an electronic device, including: one or more processors 901, and a storage device 902 storing one or more programs which, when executed by the one or more processors 901, cause the one or more processors 901 to carry out any of the SDMA methods described above.

In a fourth aspect, an embodiment of the present disclosure provides a computer-readable medium, storing a computer program which, executed by a processor, causes the processor to carry out any of the SDMA methods described above.

Those having ordinary skills in the art may understand that all or some of the steps in the method and the functional modules/units in the system and apparatus disclosed above may be implemented as software, firmware, hardware and appropriate combinations thereof. In a hardware implementation, the division between the functional modules/units mentioned in the above description does not necessarily correspond to the division of physical components. For example, one physical component may have multiple functions, or one function or step may be jointly performed by a plurality of physical components. Some or all of the physical components may be implemented as software executed by a processor such as a central processing unit, a digital signal processor or a microprocessor, or may be implemented as hardware or an integrated circuit such as an application-specific integrated circuit. Such software may be distributed on a computer-readable medium, which may include a computer storage medium (or non-transitory medium) and a communication medium (or a transitory medium). As is well known to those having ordinary skills in the art, the term "computer storage medium" includes volatile and nonvolatile, removable and non-removable media implemented in any method or technology for storing information (such as computer-readable instructions, data structures, program modules, or other data). The computer storage medium includes, but is not limited to, a random access memory (RAM), a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storages, or any other media that can be configured for storing desired information and can be accessed by a computer. Furthermore, as is well known to those having ordinary skills in the art, the communication medium typically includes computer-readable instructions, data structures, program modules or other data in a modulated data signal such as a carrier wave or other transport mechanisms, and may include any information delivery medium.

Embodiments have been disclosed herein. Although specific terms are used, they are used and should be interpreted only for general illustrative meanings and not for restrictive purposes. In some instances, it is apparent to those having ordinary skills in the art that features, characteristics and/or elements described in conjunction with a specific embodiment may be used alone or in combination with features, characteristics and/or elements described in conjunction with other embodiments, unless expressly stated otherwise. Accordingly, those having ordinary skills in the art will understand that variations in form and detail may be made without departing from the scope of the present disclosure defined by the appended claims.

## Claims

1. A Super-Cell Spatial Division Multiplex Access (SDMA) method, comprising:
obtaining a Cell-Portion (CP) activation set of a plurality of terminal devices;
classifying the terminal devices having one CP in the CP activation set into a spatial division group; and classifying the terminal devices having more than one CP in the CP activation set into a frequency division group; and
controlling the terminal devices in the spatial division group to be scheduled by the CPs to which the terminal devices belong, and scheduling the terminal devices in the frequency division group.

2. The method of claim 1, wherein the controlling the terminal devices in the spatial division group to be scheduled by the CPs to which the terminal devices belong, and scheduling the terminal devices in the frequency division group comprises:
controlling the CPs to which the terminal devices in the spatial division group belong to estimate the number of resource blocks (RBs) of the terminal devices, and estimating the number of RBs of the terminal devices in the frequency division group;
allocating the number and positions of the RBs of the terminal devices according to the number of RBs of the terminal devices; and
controlling the CPs to which the terminal devices in the spatial division group belong to schedule the terminal devices according to the allocated number and positions of the RBs, and scheduling the number and positions of the RBs allocated to the terminal devices in the frequency division group.

3. The method of claim 2, wherein the controlling the CPs to which the terminal devices in the spatial division group belong to estimate the number of RBs of the terminal devices comprises:
sending Quality of Service (QoS) queue information of the terminal devices and terminal device information of the spatial division group to the CPs corresponding to the terminal devices in the spatial division group to allow the CPs corresponding to the terminal devices in the spatial division group to estimate the number of RBs of the terminal devices corresponding thereto.

4. The method of claim 3, wherein the terminal device information comprises request bandwidth and/or baseband channel quality of the terminal devices.

5. A Super-Cell Spatial Division Multiplex Access (SDMA) apparatus, comprising:
an activation set generation module configured to obtain a Cell-Portion (CP) activation set of terminal devices;
a grouping module configured to classify the terminal devices having one CP in the CP activation set into a spatial division group, and classify the terminal devices having more than one CP in the CP activation set into a frequency division group; and
a scheduling module configured to control the terminal devices in the spatial division group to be scheduled by the CPs to which the terminal devices belong, and schedule the terminal devices in the frequency division group.

6. The apparatus of claim 5, wherein the scheduling module comprises:
an estimation unit configured to control the CPs to which the terminal devices in the spatial division group belong to estimate the number of resource blocks (RBs) of the terminal devices, and estimate the number of RBs of the terminal devices in the frequency division group;
an allocation unit configured to allocate the number and positions of the RBs of the terminal devices according to the number of RBs of the terminal devices; and
a scheduling unit configured to control the CPs to which the terminal devices in the spatial division group belong to schedule the terminal devices according to the allocated number and positions of the RBs, and schedule the number and positions of the RBs allocated to the terminal devices in the frequency division group.

7. The apparatus of claim 6, wherein the estimation unit comprises:
a sending subunit configured to send Quality of Service (QoS) queue information of the terminal devices and terminal device information of the spatial division group to the CPs corresponding to the terminal devices in the spatial division group; and
a control subunit configured to control the CPs corresponding to the terminal devices in the spatial division group to estimate the number of RBs of the terminal devices corresponding thereto.

8. The apparatus of claim 7, wherein the terminal device information comprises request bandwidth and/or baseband channel quality of the terminal devices.

9. An electronic device, comprising:
one or more processors; and
a storage device storing one or more programs which, when executed by the one or more processors, cause the one or more processors to carry out the method of any one of claims 1 to 4.

10. A computer-readable medium, storing a computer program which, when executed by a processor, causes the processor to carry out the method of any one of claims 1 to 4.
